# FASCICULE DE BREVET EUROPEEN

(11) **EP 2 916 991 B1**
(45) Date de publication et mention de la délivrance du brevet: **04.10.2017**
(21) Numéro de dépôt: 13791852.0
(22) Date de dépôt: 23.10.2013
(51) Int. Cl.: B23K 26/04, B23K 26/14, B23K 26/38

(54) **BUSE LASER AVEC ELEMENT MOBILE MODULAIRE REALISE EN MATERIAU ELECTRIQUEMENT ISOLANT ET INSERT REALISE EN MATERIAU ELECTRIQUEMENT CONDUCTEUR**
LASERDÜSE MIT EINEM MOBILEN MODULAREN ELEMENT AUS EINEM ELEKTRISCH ISOLIERENDEN MATERIAL UND EINEM EINSATZ AUS EINEM ELEKTRISCH LEITFÄHIGEN MATERIAL
LASER NOZZLE HAVING A MODULAR MOBILE ELEMENT MADE OF ELECTRICALLY INSULATING MATERIAL AND AN INSERT MADE OF ELECTRICALLY CONDUCTIVE MATERIAL

(30) Priorité: 09.11.2012 FR 1260659
(43) Date de publication de la demande: 16.09.2015
(73) Titulaire: L'Air Liquide Société Anonyme pour l'Etude et l'Exploitation des Procédés Georges Claude, 75007 Paris (FR)
(72) Inventeur: JOUANNEAU, Thomas, F-38000 Grenoble (FR); LEFEBVRE, Philippe, F-78250 Meulan (FR)
(74) Mandataire: Pittis, Olivier
(86) Numéro de dépôt international: PCT/FR2013/052534
(87) Numéro de publication internationale: WO 2014/072610

(56) Documents cités:
- EP-A1- 2 444 193
- AT-B- 391 436
- DE-C1- 19 853 735
- US-A- 5 500 504
- US-A- 6 130 405

## Description

L'invention concerne une buse laser conformément au préambule de la revendication 1 (voir, par exemple, DE198 53 735 C1), et utilisable en coupage par faisceau laser avec élément mobile interne comprenant une jupe permettant de concentrer le gaz de coupe dans la saignée de coupe et offrant, en outre, une résistance et une mise en oeuvre au plan industriel améliorées.

Le coupage par faisceau laser nécessite l'utilisation d'une buse généralement en cuivre ayant pour effet de canaliser le gaz et laisser passer le faisceau laser.

Les buses ont typiquement des diamètres de leur orifice de sortie compris entre 0.5 et 3 mm pour une distance de travail comprise entre 0,6 et 2 mm.

Afin de permettre la découpe, il est nécessaire d'utiliser des pressions élevées, en général de plusieurs bar, dans la tête de focalisation afin de permettre au gaz de rentrer dans la saignée pour chasser le métal en fusion.

Or, une grande partie du gaz utilisée, typiquement entre 50 et 90%, n'a aucune action sur le processus de découpe, c'est-à-dire sur l'expulsion du métal en fusion, car elle part sur les cotés de la saignée de coupe.

Ces pertes de gaz sont en fait dues à l'énorme différence entre la section de passage de l'orifice de buse et la taille de la tâche focale. Ainsi, à titre indicatif, la section de passage d'une buse avec orifice de sortie de diamètre égal à 1.5 mm est 25 fois plus importante que la section de la tache focale créée par le faisceau laser traversant cette buse.

Or, si une proportion insuffisante de gaz est mise en oeuvre, on assiste alors à l'apparition de défauts de coupe, en particulier des bavures adhérentes et/ou des traces d'oxydation.

Tenter d'y remédier en réduisant le diamètre de l'orifice de la buse n'est pas idéal car on prend alors le risque de voir le faisceau laser venir frapper l'intérieur de la buse et la détériorer, ce qui par ailleurs détériore également la qualité de coupe et/ou les performances.

Il existe par ailleurs un certain nombre de documents proposant diverses solutions pour tenter de favoriser l'entrée du gaz dans la saignée, par exemple EP-A-1669159, JP-A-62006790, JP-A-61037393, JP-A-63108992, JP-A-63040695 et US-A-4,031,351.

Or, aucune de ces solutions n'est vraiment idéale car souvent d'architecture complexe à mettre en oeuvre, d'encombrement supérieur à celui d'une buse classique, et/ou présentant une efficacité limitée.

Notamment, le document US-A-4,031,351 divulgue une buse de coupage laser comprenant un élément mobile dont l'extrémité est plaquée par un ressort contre la surface de la pièce à découper pour favoriser l'injection du gaz de coupe dans la saignée. Le document DE 198 53 735 C1 divulgue également une buse à élement mobile dans laquelle un ressort tend à déplacer l'élément mobile en direction de la pièce.

L'inconvénient majeur de cette solution réside dans le fait que la force exercée par le ressort en direction de la tôle, cumulée à la pression du gaz de coupe, conduit l'élément mobile à exercer un effort important sur la tôle à couper. Il s'ensuit un risque de déformation, de rayure, voire d'entraînement de la tôle, laquelle est en général simplement posée sur la table de la machine industrielle de découpe.

Pour y remédier, il a été proposé dans la demande de brevet français n° 1154224, déposée le 16 mai 2011, d'agencer un élément mobile dans le corps d'une buse laser. Cet élément mobile est apte à se déplacer axialement dans ledit corps sous l'effet d'une pression gazeuse, et ce en direction de la surface de la tôle à découper. Il s'ensuit un rapprochement de l'élément mobile de la surface supérieure de la tôle à couper jusqu'à se trouver en contact avec la tôle. L'élément mobile forme ainsi une jupe par laquelle le gaz de coupe est canalisé et concentré au niveau de la saignée, ce qui force le gaz à entrer dans la saignée et améliore son efficacité.

Toutefois, cette solution continue de poser certains problèmes, notamment dans le cadre d'un usage industriel.

Ainsi, les machines industrielles de découpe laser mettent en oeuvre un système de capteur de distance capacitif pour assurer un déplacement de la tête de focalisation à une distance constante au-dessus de la tôle à découper.

Ce système utilise l'effet capacitif pour détecter de faibles variations de distance entre deux éléments conducteurs formant un condensateur. La distance séparant les deux éléments conducteurs est déterminée en mesurant la capacité électrique de ce condensateur, qui dépend notamment de la permittivité diélectrique du milieu qui les sépare.

L'utilisation d'un tel système de capteur est notamment connue du document US 6,130,405.

Dans une machine de découpe munie d'une buse laser traditionnelle, généralement formée d'un matériau électriquement conducteur tel du cuivre, le capteur capacitif mesure la capacité électrique entre la tôle et la surface plate de la buse située en regard de la tôle. Le capteur capacitif est relié électriquement aux commandes de déplacements de la tête de focalisation de manière à ajuster le positionnement en hauteur de la tête en cas de variations de la capacité électrique mesurée ou à stopper le déplacement de la tête en cas de contact entre la buse et la tôle.

Ce système de capteur capacitif permet d'assurer des performances de coupe constantes, en termes de vitesse et qualité de coupe, en maintenant le point de focalisation du faisceau laser à une position constante par rapport à la surface de la tôle. Il permet aussi de déclencher l'arrêt de la machine en cas d'obstacles présents sur la tôle.

Il est donc indispensable de ne pas perturber son fonctionnement.

Or, l'utilisation d'une buse laser à élément mobile tel que décrite dans la demande de brevet français n°1154224 est difficilement compatible avec un tel système.

En effet, l'élément mobile de la buse forme une jupe en contact avec la tôle à découper. Pour garantir sa résistance à la chaleur dégagée par le procédé de découpe ainsi qu'aux projections de métal fondu, l'élément mobile peut être formé d'un matériau métallique tel du cuivre, du laiton ou analogue. Toutefois, l'élément mobile métallique est alors à la fois en contact avec la tôle, c'est-à-dire au même potentiel électrique que celle-ci, et en contact avec les parois internes du corps de buse, généralement formé lui aussi d'un matériau électriquement conducteur. Il faut donc désactiver le capteur capacitif pour éviter une mise en défaut de la machine de coupage.

Une solution pour autoriser le fonctionnement du capteur capacitif de la machine serait d'utiliser un élément mobile formé d'un matériau isolant électriquement. Mais cette solution n'est pas idéale car les matériaux isolants électriquement sont en général peu résistants à la forte chaleur dégagée par le procédé de découpe, aux projections de métal en fusion et/ou aux chocs thermiques.

Le problème qui se pose est dès lors de pallier tout ou partie des inconvénients susmentionnés, en proposant notamment une buse laser dont la robustesse, la durée de vie et la mise en oeuvre au plan industriel sont grandement améliorée par rapport aux solutions existantes et qui ne perturbe pas, ou nettement moins que dans l'art antérieur, le fonctionnement d'un système de capteur de distance capacitif équipant une machine de découpe industrielle.

La solution de la présente invention est alors une buse laser telle que définie dans la revendication 1. Selon le cas, la buse de l'invention peut comprendre l'une ou plusieurs des caractéristiques techniques suivantes :
- le deuxième logement axial de l'élément mobile comprend un deuxième orifice de sortie situé au niveau d'une face avant de l'élément mobile, l'insert étant agencé dans le deuxième logement axial de manière à ce que la partie avant formant jupe fasse saillie à l'extérieur dudit deuxième logement axial au travers du deuxième orifice de sortie.
- l'élément mobile est apte à se déplacer en translation dans le premier logement axial du corps de buse jusqu'à ce que la partie avant formant jupe de l'insert fasse saillie à l'extérieur dudit logement axial au travers du premier orifice de sortie de la face avant du corps de buse.
- le corps de buse, l'élément mobile et l'insert sont des pièces de révolution agencées coaxialement les unes aux autres.
- l'insert comprend une paroi périphérique externe dont la section maximale est inférieure à la section minimale du premier logement axial.
- le deuxième logement comprend au moins un deuxième épaulement interne, et la paroi périphérique externe de l'insert comprend en outre une partie arrière comprenant une deuxième butée agencée en regard dudit deuxième épaulement interne.
- l'élément mobile est apte à se déplacer entre plusieurs positions comprenant :
   - une position de repos dans laquelle la partie avant de l'insert est totalement ou quasi-totalement rentrée dans le premier logement axial du corps de buse, et
   - une position de travail dans laquelle la jupe de la partie avant de l'insert fait totalement ou quasi-totalement saillie à l'extérieur du premier logement axial du corps de buse, au travers du premier orifice de sortie.
- au moins un élément d'étanchéité est agencé entre le corps de buse et l'élément mobile, par exemple un ou plusieurs joints toriques.
- ledit au moins un élément d'étanchéité est agencé dans une gorge périphérique aménagée dans la paroi périphérique externe de l'élément mobile.

L'invention porte également sur une tête de focalisation laser comprenant au moins une optique de focalisation, par exemple une ou plusieurs lentilles ou miroirs, notamment une lentille de focalisation et une lentille de collimation, comportant en outre une buse laser selon l'invention, voir revendication 9.

Par ailleurs, l'invention concerne aussi une installation laser comprenant un générateur laser, une tête de focalisation laser et un dispositif de convoyage de faisceau laser relié audit générateur laser et à ladite tête de focalisation laser selon l'invention, voir revendication 10. De préférence, le générateur ou source laser est de type CO₂, YAG, à fibres ou à disques, de préférence à fibres ou à disques, notamment une source laser à fibres d'ytterbium.

Selon un autre aspect, l'invention a également trait à un procédé de coupage par faisceau laser, dans lequel on met en oeuvre une buse selon l'invention, une tête de focalisation laser selon l'invention ou une installation selon l'invention, voir revendication 12. L'invention va maintenant être mieux comprise grâce à la description suivante faite en références aux Figures annexées parmi lesquelles :
- la Figure 1A schématise une tête de focalisation d'une installation de coupage laser classique,
- la Figure 1B schématise la taille du spot laser par rapport à la taille de l'orifice de buse,
- la Figure 2 est un schéma en coupe du corps d'une buse selon la demande de brevet français n°1154224 et selon la présente invention,
- la Figure 3 est un schéma en coupe d'une buse selon la demande de brevet français n°1154224,
- la Figure 4 est un schéma en coupe d'une buse selon un mode de réalisation de l'invention,
- les Figures 5A et 5B sont des schémas en coupe d'une buse selon un autre mode de réalisation de l'invention dans deux positions différentes, et
- les Figures 6A et 6B montrent la buse de l'invention en configuration de coupe et dans deux positions différentes.

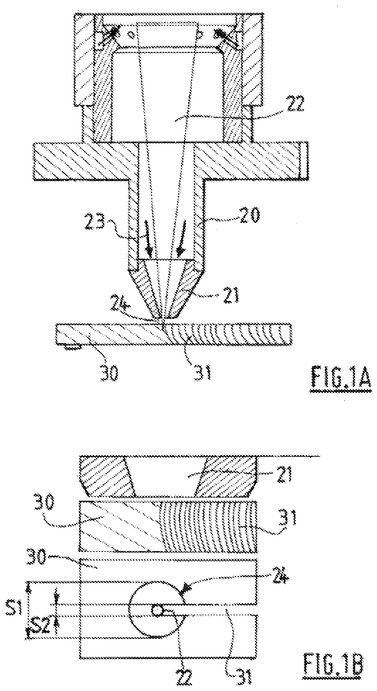

La Figure 1A représente la tête de focalisation 20 d'une installation de coupage laser classique, auquel est fixée une buse laser 21 classique qui est traversée par un faisceau laser focalisé et par du gaz d'assistance (flèche 23) servant à expulser le métal fondu par le faisceau hors de la saignée 31 de coupe formée par le faisceau 22 dans la pièce métallique à couper 30, par exemple une tôle en acier ou en acier inoxydable.

Le gaz d'assistance peut être un gaz actif, tel de l'oxygène, de l'air, du CO₂, de l'hydrogène, ou un gaz inerte, tel l'argon, l'azote, l'hélium, ou un mélange de plusieurs de ces gaz actifs et/ou inertes. La composition du gaz est choisie notamment en fonction de la nature de la pièce à couper.

Le faisceau qui vient impacter la pièce va y fondre le métal qui sera expulsé en-dessous de la pièce par la pression du gaz d'assistance.

La Figure 1B permet de bien visualiser la section S1 de passage de l'orifice 24 de la buse 21 par rapport à la taille S2 de la tâche focale du faisceau 22. Comme on le voit, la section S1 est très supérieure à la taille S2 de la tâche focale du faisceau 22, ce qui engendre, avec les buses classiques, une consommation élevée de gaz d'assistance dont seulement une faible proportion va servir à expulser le métal fondu hors de la saignée de coupe 31.

Pour réduire considérablement la consommation de gaz ainsi que la pression nécessaire à la découpe, il a été proposé dans la demande de brevet français n°1154224 une buse laser apte à et conçue pour couper avec un faisceau laser en mettant en oeuvre un débit de gaz et/ou une pression de gaz réduits grâce à une architecture de buse particulière permettant de forcer une proportion plus importante de gaz à rentrer dans la saignée 31 et à y expulser efficacement le métal fondu, et ce, quelle que soit la puissance laser ainsi et la longueur d'onde du faisceau.

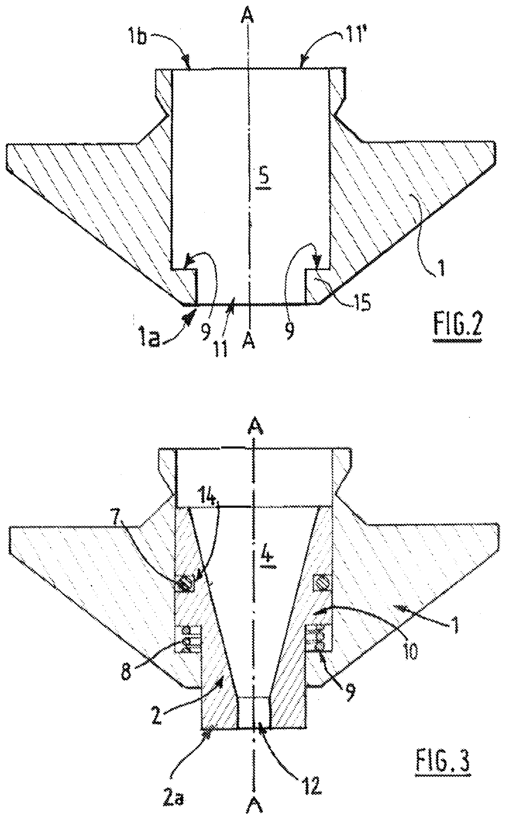

Selon le document FR n°1154224, la buse laser comprend au moins deux composants essentiels, à savoir un corps 1 de buse coopérant avec un élément mobile 2 agencé de façon mobile à l'intérieur du corps 1 de la buse, dont un mode de réalisation est illustré en Figures 2 et 3.

Plus précisément, comme visible en Figure 2, le corps 1 de buse qui est formé d'un matériau conducteur, par exemple du cuivre ou du laiton, est destiné à venir se fixer sur la tête de focalisation laser 20 de l'installation laser.

Avantageusement, le corps 1 de buse est une pièce de révolution traversée de part en part par un premier logement axial 5 d'axe AA qui s'étend depuis la face arrière 1b du corps 1 jusqu'à la face avant 1a dudit corps 1.

Le premier logement axial 5 débouche au niveau des deux faces avant 1a et arrière 1b du corps 1 de buse. La face arrière 1b porte donc un premier orifice d'entrée 11', alors que la face avant 1a porte un premier orifice de sortie 11 du corps de buse 1, les premiers orifices d'entrée 11' et de sortie 11 étant coaxiaux d'axe AA.

Ce premier logement axial 5 est en fait un évidement, par exemple de forme générale cylindrique, comprenant un fond 15 comprenant un premier épaulement 9 interne se projetant radialement vers le centre du logement 5, ledit premier épaulement interne 9 étant formé par une restriction 15 de la section du logement axial 5 au niveau du premier orifice de sortie 11 située en face avant 1a du corps 1 de buse.

La buse du document FR n°1154224 comprend par ailleurs un élément mobile 2 venant s'insérer dans le premier logement 5 du corps 1 de buse, de préférence coaxialement au corps 1, comme visible en Figure 3. Cet élément mobile 2 est apte à et conçu pour se déplacer en translation selon l'axe AA à l'intérieur du premier logement 5 du corps 1 de buse.

La paroi périphérique externe de l'élément mobile 2 comprend une première butée 10 agencée en regard dudit premier épaulement interne 9, un élément élastique 8 étant positionné entre l'épaulement 9 et la butée 10.

Selon le document FR n°1154224, cet élément mobile 2 comprend une partie avant 2a formant une jupe 6 de forme cylindrique, c'est-à-dire tubulaire, agencée dans le premier logement axial 5 du corps de buse 1 et comprenant un deuxième logement axial 4 avec un deuxième orifice de sortie 12 débouchant au niveau de la partie avant 2 formant ladite jupe 6.

Pendant l'utilisation de la buse, le faisceau laser 22 et le gaz d'assistance 23 traversent le deuxième logement axial 4 de l'élément mobile 2 et ressortent par le deuxième orifice de sortie 12 débouchant au niveau de la partie avant 2a formant ladite jupe 6

L'élément mobile 2 est déplaçable axialement par rapport au corps 1 de la buse selon l'axe AA. En fait, l'élément mobile 2 se déplace sous l'effet de la pression du gaz d'assistance 23 qui vient s'exercer sur ledit élément mobile 2, ce qui tend à le pousser en direction de la pièce à couper 30.

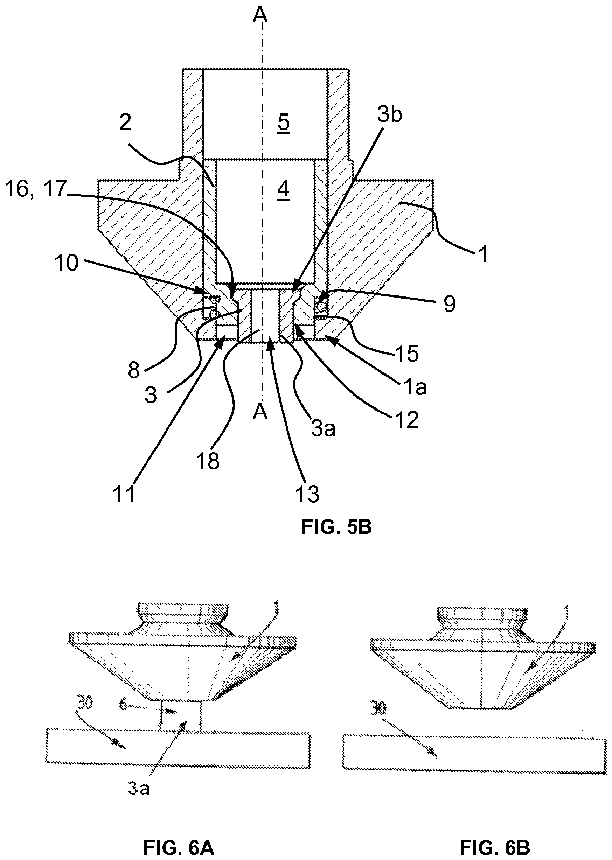

Le déplacement en translation selon l'axe AA de l'élément mobile 2 va provoquer le rapprochement de la jupe 6 de la surface supérieure 30 de la tôle à couper, qui vont venir en contact l'une de l'autre, comme illustré en Figure 6A.

Ainsi, le gaz va être canalisé par la jupe 6 et se trouver concentré au niveau de la tâche laser et donc de la saignée, ce qui va grandement améliorer son efficacité et l'expulsion du métal se fera mieux.

Un élément élastique 8, tel un ressort, est agencé dans le premier logement axial 5, entre le corps de buse 1 et l'élément mobile 2 de manière à exercer une force de rappel élastique sur l'élément mobile 2 dans un sens tendant à l'éloigner de la pièce à couper.

Selon le document FR n°1154224, l'élément mobile 2 est une pièce de révolution formée d'un seul bloc d'un même matériau. Ce matériau peut être soit électriquement isolant, soit électriquement conducteur.

Toutefois, aucune de ces solutions n'est idéale, et ce pour les raisons déjà mentionnées. D'une part, les matériaux électriquement isolant, tels les matériaux plastiques, ne sont pas appropriés car peu résistants aux fortes températures, typiquement de 1000 à 2000 °C, rencontrées au voisinage de la saignée de découpe et/ou trop abrasifs envers la surface de la tôle. D'autre part, utiliser un matériau électriquement conducteur impose de désactiver le capteur capacitif, ce qui nuit à la fiabilité et aux performances du procédé de découpe.

Pour remédier à cela, la présente invention propose une buse laser à élément mobile amélioré.

Selon l'invention, on agence dans le premier logement axial 5 d'un corps 1 de buse selon l'art antérieur, tel que représenté sur la Figure 2, un élément mobile 2 selon l'invention formé d'un matériau électriquement isolant, ledit élément mobile 2 comprenant un deuxième logement axial 4.

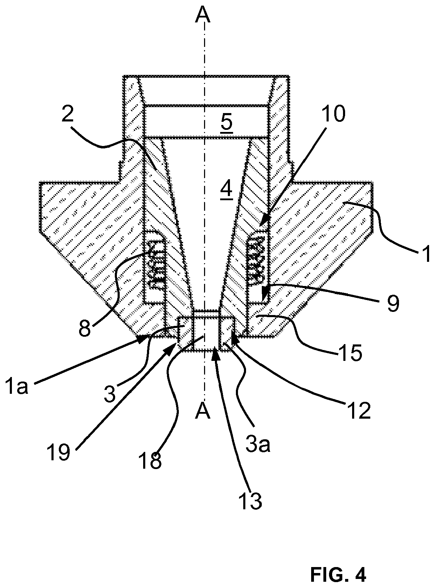

Un tel élément mobile 2 est schématisé sur la Figure 4, qui représente un mode de réalisation de la présente invention. Comme on le voit, la buse selon l'invention comprend en outre un insert 3 comprenant un passage axial 18 et une partie avant 3a formant jupe, ledit insert 3 étant agencé dans le deuxième logement axial 4 de l'élément mobile 2.

L'insert 3 est formé d'un matériau électriquement conducteur. De préférence, l'insert 3 est formé d'un matériau métallique, tel de l'acier, du bronze, un acier réfractaire, du cuivre, du laiton, un matériau céramique électriquement conducteur, de préférence un matériau électriquement conducteur qui induise un frottement limité sur la tôle pour limiter une usure de la tôle.

L'élément mobile 2 est formé d'un matériau électriquement isolant. Par matériau électriquement isolant, on entend un matériau qui ne conduit pas l'électricité, c'est-à-dire qui interdit le passage de courant électrique entre deux éléments conducteurs électrique. De préférence, l'élément mobile 2 est formé d'une céramique technique isolante électriquement, par exemple du type Al₂O₃, AlN, ZrO₂ ou Al₂TiO₅, un matériau polymère, par exemple du polyétheréthercétone (Peek) ou Vespel ®, de céramique électriquement isolante ou de pyrex.

En fait, la buse selon l'invention se distingue essentiellement par sa structure interne qui comprend deux parties distinctes formées de matériaux de nature différente. Ainsi, elle offre la possibilité de sélectionner un premier matériau approprié pour l'élément mobile et un deuxième matériau approprié pour l'insert 3 comprenant la partie avant 3a formant jupe.

La buse offre donc une résistance améliorée aux fortes températures rencontrées lors du procédé de découpe et aux chocs puisque la partie avant 3a formant jupe peut être formée d'un matériau électriquement conducteur offrant la résistance adéquate. En outre, le fait que la jupe soit formée d'un matériau électriquement conducteur ne perturbe plus le fonctionnement du capteur capacitif car l'élément mobile 2 en matériau isolant permet d'éviter tout contact électrique entre l'insert 3 et le corps 1 de buse.

Avantageusement, le deuxième logement axial 4 de l'élément mobile 2 comprend un deuxième orifice de sortie 12 situé au niveau d'une face avant 2a de l'élément mobile 2. L'insert 3 est agencé dans le deuxième logement axial 4 de manière à ce que la partie avant 3a formant jupe fasse saillie à l'extérieur dudit deuxième logement axial 4 au travers du deuxième orifice de sortie 12.

De préférence, le corps 1 de buse, l'élément mobile 2 et l'insert 3 sont des pièces de révolution formées chacune d'un seul bloc et agencées coaxialement les unes aux autres. Dit autrement, les axes de symétrie de l'élément mobile 2 et de l'insert (3) sont alignés sur l'axe AA du corps 1 de buse.

Le passage axial 18 de l'insert 3 peut avoir un profil interne de forme cylindrique, tronconique, convergent-divergent, c'est-à-dire une géométrie De Laval ou tout autre géométrie. L'insert 3 comprend un troisième orifice de sortie 13, de préférence de section circulaire, débouchant en aval du deuxième orifice de sortie 12 de l'élément mobile 2. Le diamètre troisième orifice de sortie 13 est de préférence compris entre 0.5 et 5 mm, de préférence encore entre 1 et 3,5 mm.

Selon l'invention, l'élément mobile 2 est apte à se déplacer en translation dans le premier logement axial 5 du corps 1 de buse jusqu'à ce que la partie avant 3a formant jupe de l'insert 3 fasse saillie à l'extérieur du premier logement axial 5 au travers du premier orifice de sortie 11 de la face avant 1a du corps 1 de buse.

L'insert 3 peut être solidarisé à l'élément mobile 2, par collage, emmanchement en force ou tout autre moyen d'assemblage dans le deuxième logement axial 4 de l'élément mobile 2. Dans ce cas, la paroi périphérique externe de l'insert 3 peut être de forme générale cylindrique, tel qu'illustré sur la Figure 4.

De manière alternative, l'insert 3 peut être libre en translation dans le deuxième logement axial 4 de l'élément mobile 2. Dans ce cas, le deuxième logement 4 comprend de préférence au moins un deuxième épaulement interne 16, et la paroi périphérique externe de l'insert 3 comprend en outre une partie arrière 3b comprenant une deuxième butée 17 agencée en regard dudit deuxième épaulement interne 16.

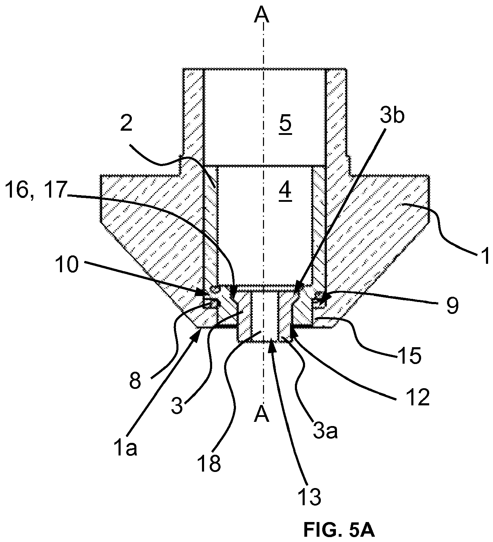

Ce mode de réalisation est illustré sur la Figure 5A. L'insert 3 est alors maintenu en butée 17 contre le deuxième épaulement interne 16 du deuxième logement axial 4. De préférence, le deuxième épaulement interne 16 et la deuxième butée 17 sont de forme annulaire et s'étendent sur tout ou partie de la périphérie de l'élément mobile 2 et de l'insert 3 respectivement.

Le deuxième épaulement interne 16 est formé par une restriction de la section du deuxième logement axial 4 se projetant radialement ou de manière oblique vers l'axe AA du corps 1 de buse. La forme de la deuxième butée 17 de l'insert 3 est conformée pour épouser la forme du deuxième épaulement interne 16, qui peut être plat, c'est-à-dire de surface perpendiculaire à l'axe AA, ou oblique.

Avantageusement, le deuxième épaulement interne 16 est un épaulement oblique, tel que représenté sur la Figure 5A, afin d'autoriser un léger mouvement de l'insert 3 dans le deuxième logement axial 4 en cas de dilatation thermique dudit insert 3.

Dans tous les cas, lorsque l'élément mobile 2 se déplace en translation dans le premier logement 5, il entraîne avec lui l'insert 3 jusqu'à ce que la partie avant 3a fasse saillie au travers du premier orifice de sortie 11, c'est-à-dire en aval de la face avant 1a du corps 1 de buse. L'insert 3 se déplace ainsi dans la même direction que l'élément mobile 2, c'est-à-dire en direction de la surface de la tôle à couper lorsque celle-ci est agencée sous la buse de l'invention. Selon l'invention, l'élément mobile 2 est apte à se déplacer en translation dans le premier logement axial 5 en direction du premier orifice de sortie 11 sous l'effet d'une pression gazeuse s'exerçant sur ledit élément mobile 2 et/ou sur ledit insert 3. L'insert 3 peut avantageusement être maintenu en butée 17 contre le deuxième épaulement interne 16 sous l'effet de ladite pression gazeuse.

En fait, la buse de l'invention est destinée à équiper une tête de focalisation montée dans une installation de coupage laser industrielle. Ce type d'installation comprend habituellement une source de gaz reliée à au moins une canalisation apte à et conçue pour alimenter en gaz de coupe la tête de focalisation, plus précisément le volume interne de ladite tête. La buse laser est connectée fluidiquement à la tête de focalisation l'élément mobile de manière à ce que le gaz de coupe alimentant la tête de focalisation soir distribué vers la buse laser selon l'invention.

Selon un mode de réalisation de l'invention, l'élément mobile 2 de la buse est apte à et conçu pour se déplacer en translation dans le premier logement 5 du corps 1 de buse lorsque la source de gaz alimente en gaz la tête de focalisation et la buse laser. Le gaz de coupe distribué dans la tête de focalisation exerce alors une pression gazeuse sur ledit élément mobile 2 qui induit un déplacement dudit élément 2 dans le premier logement axial 5.

Les Figures 5A et 5B schématisent un tel déplacement en translation de l'élément mobile 2 dans le premier logement 5, ce déplacement engendrant simultanément un déplacement en translation de l'insert 3 en direction du premier orifice de sortie 11 du corps 1 de buse.

En particulier, la Figure 5A schématise une buse selon l'invention comprenant un élément mobile 2 rentré dans le premier logement 5 et un insert 3 dont la partie avant 3a est quasi-totalement rentrée dans le premier logement 5. La Figure 5B schématise l'effet d'une pression gazeuse s'exerçant sur l'élément mobile 2, celui-ci se déplaçant jusqu'à ce que la partie avant 3a fasse saillie à l'extérieur du premier logement 5.

Dans le cadre de l'invention, un élément élastique 8 est agencé dans le premier logement axial 5, entre le corps 1 de buse et l'élément mobile 2. L'élément élastique 8 exerce, selon l'invention, une force de rappel élastique sur l'élément mobile 2 tendant à s'opposer au mouvement de translation dans le logement axial 5 en direction du premier orifice de sortie 11.

Ainsi, en fin de coupe, lorsque le gaz est coupé et que la pression gazeuse cesse de s'exercer sur l'élément mobile 2 et/ou sur l'insert 3, celui-ci est rappelé dans sa position de repos, c'est-à-dire jusqu'à ce que la jupe 6 de l'insert 3 rentre à l'intérieur du premier logement 5.

L'élément élastique 8 permet ainsi de limiter le phénomène d'usure de la jupe 6 lors des phases de perçage de la tôle qui précèdent généralement les phases de découpe. En effet le perçage est le plus souvent opéré avec de faibles pressions de gaz, typiquement moins de 4 bar. L'élément élastique exerce alors une force de rappel suffisante pour que la jupe 6 remonte totalement ou quasi-totalement dans le logement 5 et soit ainsi protégée des projections de métal fondu générées par le perçage.

L'élément élastique 8 facilite aussi les déplacements rapides de la tête de découpe à faible distance au-dessus de la tôle, sans gaz de coupe ni faisceau, puisque la pression gazeuse cesse alors de s'exercer sur l'élément mobile et la jupe 6 rentre à l'intérieur du logement 5. Seule la jupe 6 remonte et il n'est pas nécessaire de relever la tête de focalisation supportant la buse.

En outre, l'élément élastique 8 permet de limiter la pression exercée par l'élément mobile 2 sur la pièce à couper lorsque celui-ci se déplace en direction de la pièce sous l'effet du gaz de coupe. Plus précisément, la force de rappel de l'élément élastique 8 est avantageusement dimensionnée de manière à maintenir l'élément mobile 2 au contact de la pièce à couper tout en limitant la pression que ledit élément exerce sur la tôle, pour minimiser grandement, voire éliminer, tout risque de déformation de la tôle dans laquelle la pièce est découpée, de rayures de la surface de la tôle, et d'entraînement de la tôle.

Optionnellement, au moins un élément d'étanchéité (non représenté) est agencé entre le corps de buse 1 et l'élément mobile 2, en particulier un ou plusieurs joints toriques, ce qui permet d'assurer une étanchéité entre le corps de buse 1 et l'insert mobile 2. De préférence, ledit au moins un élément d'étanchéité est agencé dans une gorge périphérique (non représentée) aménagée dans la paroi périphérique externe de l'élément mobile 2.

Avantageusement, le premier logement axial 5 du corps 1 de buse comprend un premier épaulement interne 9, de préférence situé au niveau du fond 15 dudit premier logement 5, et la paroi périphérique externe de l'élément mobile 2 comprend une première butée 10 agencée en regard dudit premier épaulement interne 9. L'élément élastique 8 est positionné entre le premier épaulement 9 et la première butée 10.

L'insert 3 comprend une paroi périphérique externe qui peut avoir différentes formes : par exemple cylindrique ou généralement cylindrique avec une partie arrière 3b comprenant une deuxième butée 17 à surface plate, c'est-à-dire perpendiculaire à l'axe AA, ou oblique. La section de la paroi périphérique externe de l'insert 3 peut donc avoir des dimensions qui varient le long de l'axe AA.

Dans tous les cas, les dimensions de la section de la paroi périphérique externe de l'insert 3 sont comprises entre 0,2 et 50 mm, de préférence entre 1 et 6 mm. La hauteur de l'insert 3, c'est-à-dire sa dimension le long de l'axe AA est comprise entre 0,1 et 100 mm, de préférence entre 1 et 10 mm.

Avantageusement, la section maximale de la paroi périphérique externe de l'insert 3 est inférieure à la section minimale du premier logement axial 5 du corps 1 de buse.

Dit autrement, dans les modes de réalisation illustrés sur les Figures 4, 5A et 5B, les dimensions de la section de la paroi périphérique externe de l'insert 3 restent, le long de l'axe AA, inférieures à celles de la section du premier logement axial 5 au niveau de la restriction formant le premier épaulement interne 9.

En effet, on s'est aperçu en pratique que le fonctionnement du capteur capacitif pouvait être perturbé lorsqu'une surface de la paroi périphérique externe de l'insert 3 se trouve en regard de la surface du premier épaulement interne 9 aménagé dans le premier logement axial 5. Ceci est du notamment au fait que ces surfaces sont formées de matériaux électriquement conducteurs et que la distance qui les sépare peut varier sensiblement au cours du procédé de découpe.

La buse de l'invention présente l'avantage de permettre un dimensionnement de l'insert 3 de manière à ce que les surfaces de sa paroi périphérique externe ne s'étendent pas au-delà de la section du fond 15, tout en permettant un agencement de la butée 10 de l'élément mobile 2 en regard du premier épaulement 9. De la sorte, la buse de l'invention ne présente aucune surface électriquement conductrice en regard de la surface du premier épaulement 9.

Optionnellement, la partie avant 3a de l'insert 3 peut comprendre une portion d'extrémité aval dont le diamètre externe diminue progressivement en direction du troisième orifice de sortie 13. De la sorte, la partie avant 2a est conformée pour faciliter son passage sur des reliefs ou obstacles présents à la surface de la tôle.

Par portion d'extrémité aval, on entend une portion de la partie avant 3a située à l'extrémité de ladite partie avant, c'est-à-dire en regard de la surface supérieure de la tôle à couper.

La portion d'extrémité aval est ainsi conformée pour passer sur un dénivelé ou un obstacle sans ou avec un choc grandement réduit au niveau de la jupe 6, et sans ou alors très peu de diminution de la vitesse de déplacement de la buse. On évite aussi la présence d'une arête vive à l'extrémité de la partie avant 3a, ce qui procure une plus grande souplesse de mouvement à la jupe 6 et lui permet de suivre les variations de niveaux qui peuvent se présenter sur la surface de la tôle à couper, ce qui améliore encore sa mise en oeuvre au plan industriel.

Dans le cadre de l'invention, la portion d'extrémité aval peut comprendre au moins un chanfrein 19 formant un angle α compris entre 0,1 et 80°, de préférence entre 10 et 45°, par rapport à la face avant 1a du corps de buse 1.

De manière alternative, le profil externe de la portion d'extrémité aval peut comprendre au moins une portion de forme curviligne, de préférence au moins une portion de forme convexe. Le rayon de courbure de la au moins une portion de forme convexe est typiquement compris entre 0,1 et 2 mm.

Comme on le voit sur les Figures 4 et 5, la buse de l'invention est d'encombrement standard, c'est-à-dire que son encombrement n'est pas augmenté par rapport à une buse de coupe classique, ce qui est avantageux et compatible pour les découpes par imbrication, c'est-à-dire de pièces au sein d'une même tôle avec très peu d'écart entre les différentes pièces.

De plus, la buse de l'invention présente l'avantage majeur d'offrir une durée de vie accrue tout en étant compatible avec les systèmes de capteur capacitif.

De façon connue en soi, le corps 1 de buse en matériau conducteur électrique est relié électriquement au système de capteur capacitif qui équipe la tête de focalisation lorsque ledit corps est assemblé à la tête. Dans le cadre de l'invention, c'est l'insert 3 et non plus l'élément mobile 2 qui, sous la pression du gaz, vient en contact avec la tôle 30 à couper pour limiter les fuites de gaz. Le fonctionnement du capteur capacitif n'est pas perturbé car le corps 1 de buse et l'insert 3 sont isolés électriquement par le biais de l'élément mobile 2. Le capteur capacitif est ainsi capable de mesurer une ou plusieurs valeurs de capacité électrique entre la face avant 1a du corps 1 de buse et la surface supérieure de la tôle à couper, et d'ajuster, à partir des valeurs mesurées, la distance entre la face avant 1a du corps 1 de buse et la surface supérieure de la tôle. Ainsi, il peut détecter toute variation de cette distance et corriger en conséquence le positionnement de la tête de focalisation.

En fait, l'élément mobile 2 de la buse selon l'invention est apte à se déplacer entre plusieurs positions comprenant au moins:
- une position de repos dans laquelle la partie avant 3a de l'insert 3 est totalement ou quasi-totalement rentrée dans le premier logement axial 5 du corps de buse 1, comme illustré en Figure 6B, et
- une position de travail dans laquelle la jupe de la partie avant 3a de l'insert 3 fait totalement ou quasi-totalement saillie à l'extérieur du premier logement axial 5 du corps de buse 1, au travers du premier orifice de sortie 11, et vient au contact de la pièce à couper, comme illustré en Figure 6A.

Bien entendu, l'élément mobile 2 peut occuper des positions intermédiaires dans lesquelles la jupe 6 ne fait que partiellement saillie à l'extérieur du logement axial 5 du corps de buse 1. Ces positions intermédiaires peuvent être notamment fonction de la pression exercée par le gaz sur l'élément mobile 2.

La solution de la présente invention conduit ainsi à une buse à élément mobile avec une robustesse, une durée de vie et une mise en oeuvre industrielle améliorées par rapport à une buse selon le document FR n°1154224.

### Exemples

Afin de montrer l'efficacité de la buse selon l'invention par rapport à une buse standard, c'est-à-dire une buse classique sans élément mobile, et donc l'intérêt de forcer le gaz dans la saignée de coupe grâce à la mise en oeuvre d'une jupe montée sur un élément mobile, on a réalisé des essais comparatifs en utilisant une installation de coupage avec générateur laser de type CO₂ pour généré un faisceau laser qui est amené à une tête de focalisation laser comprenant des optiques de focalisation, à savoir des lentilles.

La tête de focalisation laser est équipée, selon le cas, d'une buse standard avec orifice de sortie de 1,8 mm de diamètre ou d'une buse selon la Figure 4A avec jupe mobile cylindrique et passage axial de profil cylindrique avec orifice de sortie de 1,8 mm de diamètre. En outre, le profil externe de la jupe mobile comprend un chanfrein d'un angle α d'environ 30° par rapport à l'horizontale, i. e. par rapport à la face avant du corps de buse.

Le gaz d'assistance utilisé est de l'azote.

La tôle à couper est en acier inoxydable 304 L de 5 mm d'épaisseur.

Le faisceau laser à une puissance de 4 kW et la vitesse de coupe est de 2,6 m/min

Les résultats obtenus ont montré que :
- avec la buse standard, une pression du gaz de 14 bar est insuffisante pour obtenir une coupe de qualité. En effet, à 14 bar, les bords de coupe comportent de nombreuses bavures adhérentes. Ceci démontre que l'évacuation du métal en fusion se fait mal du fait d'une action insuffisante du gaz sur le métal en fusion devant être expulsé. Afin d'éliminer ces bavures, une pression de 16 bar a été nécessaire.
- avec la buse de l'invention, des essais faits à des pressions s'échelonnant entre 1 et 5 bar ont conduit à des coupes de bonne qualité, c'est-à-dire à des bords de coupe dépourvus de bavures adhérentes. La jupe de la buse permet de canaliser le gaz dans la saignée et d'expulser efficacement le métal fondu. En outre, la buse autorise le fonctionnement du capteur capacitif et la distance entre la face avant du corps de buse et la surface supérieure de la tôle peut être maintenue constante au cours du procédé de coupe.

Ces essais démontrent clairement l'efficacité d'une buse selon l'invention qui permet de réduire considérablement les pressions de gaz à mettre en oeuvre par rapport à une buse standard, toutes conditions étant égales par ailleurs, et donc de réduire également les consommations gazeuses.

## Revendications

1. Buse laser (1, 2, 3) comprenant :
- un corps (1) de buse comprenant un premier logement axial (5) ayant un premier orifice de sortie (11) situé au niveau d'une face avant (1a) du corps (1) de buse,
- un élément mobile (2) comprenant un deuxième logement axial (4), ledit élément mobile (2) étant agencé dans le premier logement axial (5),
- un élément élastique (8) agencé dans le premier logement axial (5) entre le corps (1) de buse et l'élément mobile (2), et
- un insert (3) comprenant un passage axial (18) et une partie avant (3a) formant jupe faisant saillie à l'extérieur du deuxième logement axial (4), ledit insert (3) étant agencé dans le deuxième logement axial (4) de l'élément mobile (2),
**caractérisée en ce que** l'élément mobile (2) est apte à se déplacer en translation dans le premier logement axial (5) en direction du premier orifice de sortie (11) sous l'effet d'une pression gazeuse s'exerçant sur ledit élément mobile (2) et/ou ledit insert (3), l'élément élastique (8) exerçant une force de rappel élastique sur l'élément mobile (2) tendant à s'opposer au mouvement de translation de l'élément mobile (2) dans le premier logement axial (5) en direction du premier orifice de sortie (11), et l'insert (3) est formé d'un matériau électriquement conducteur et l'élément mobile (2) est formé d'un matériau électriquement isolant.

2. Buse selon la revendication 1, **caractérisée en ce que** le deuxième logement axial (4) de l'élément mobile (2) comprend un deuxième orifice de sortie (12) situé au niveau d'une face avant (2a) de l'élément mobile (2), l'insert (3) étant agencé dans le deuxième logement axial (4) de manière à ce que la partie avant (3a) formant jupe fasse saillie à l'extérieur dudit deuxième logement axial (4) au travers du deuxième orifice de sortie (12).

3. Buse selon l'une des revendications précédentes, **caractérisée en ce que** l'élément mobile (2) est apte à se déplacer en translation dans le premier logement axial (5) du corps (1) de buse jusqu'à ce que la partie avant (3a) formant jupe de l'insert (3) fasse saillie à l'extérieur dudit logement axial (5) au travers du premier orifice de sortie (11) de la face avant (1a) du corps de buse (1).

4. Buse selon l'une des revendications précédentes, **caractérisée en ce que** le premier logement axial (5) du corps (1) de buse comprenant un orifice d'entrée (11') permettant d'alimenter ledit premier passage axial (5) en gaz d'assistance (23).

5. Buse selon l'une des revendications précédentes, **caractérisée en ce que** le corps (1) de buse, l'élément mobile (2) et l'insert (3) sont des pièces de révolution agencées coaxialement les unes aux autres.

6. Buse selon l'une des revendications précédentes, **caractérisée en ce que** l'insert (3) comprend une paroi périphérique externe dont la section maximale est inférieure à la section minimale du premier logement axial (5).

7. Buse selon l'une des revendications précédentes, **caractérisée en ce que** le deuxième logement axial (4) comprend au moins un deuxième épaulement interne (16), et la paroi périphérique externe de l'insert (3) comprend en outre une partie arrière (3b) comprenant une deuxième butée (17) agencée en regard dudit deuxième épaulement interne (16).

8. Buse selon l'une des revendications précédentes, **caractérisée en ce que** l'élément mobile (2) est apte à se déplacer entre plusieurs positions comprenant :
- une position de repos dans laquelle la partie avant (3a) de l'insert (3) est totalement ou quasi-totalement rentrée dans le premier logement axial (5) du corps de buse (1), et
- une position de travail dans laquelle la jupe de la partie avant (3a) de l'insert (3) fait totalement ou quasi-totalement saillie à l'extérieur du premier logement axial (5) du corps de buse (1), au travers du premier orifice de sortie (11).

9. Tête de focalisation laser comprenant au moins une optique de focalisation, **caractérisée en ce qu'**elle comporte en outre une buse laser selon l'une des revendications précédentes.

10. Installation laser comprenant un générateur laser, de préférence un laser est de type CO₂, YAG, à fibres ou à disques, une tête de focalisation laser et un dispositif de convoyage de faisceau laser relié audit générateur laser et à ladite tête de focalisation laser, **caractérisée en ce que** la tête de focalisation laser est selon la revendication 9.

11. Installation selon la revendication 10, **caractérisée en ce qu'**elle comprend une source de gaz et au moins une canalisation d'amenée de gaz reliant fluidiquement la tête de focalisation et la source de gaz, la buse laser étant reliée fluidiquement à la tête de focalisation et l'élément mobile (2) se déplaçant en translation dans le premier logement (5) du corps (1) de buse lorsque la source de gaz alimente en gaz la tête de focalisation et la buse laser.

12. Procédé de coupage par faisceau laser, dans lequel on met en oeuvre une buse selon l'une des revendications 1 à 8, une tête de focalisation laser selon la revendication 9 ou une installation selon l'une des revendications 10 ou 11.

## Patentansprüche

1. Laserdüse (1, 2, 3) umfassend:
- einen Düsenkörper (1), der eine erste axiale Aufnahme (5) umfasst, die eine erste Ausgangsöffnung (11) besitzt, die sich auf Höhe einer Vorderfläche (1a) des Düsenkörpers (1) befindet,
- ein mobiles Element (2), das eine zweite axiale Aufnahme (4) umfasst, wobei das mobile Element (2) in der ersten axialen Aufnahme (5) angeordnet ist,
- ein elastisches Element (8), das in der ersten axialen Aufnahme (5) zwischen dem Düsenkörper (1) und dem mobilen Element (2) angeordnet ist, und
- einen Einsatz (3), der einen axialen Durchgang (18) und einen vorderen Teil (3a) umfasst, der eine Schürze bildet, die zur Außenseite der zweiten axialen Aufnahme (4) hervorspringt, wobei der Einsatz (3) in der zweiten axialen Aufnahme (4) des mobilen Elements (2) angeordnet ist,
**dadurch gekennzeichnet, dass** das mobile Element (2) in der Lage ist, sich unter der Wirkung eines Gasdrucks, der sich auf das mobile Element (2) und/oder den Einsatz (3) aufschlägt, translatorisch in der ersten axialen Aufnahme (5) in Richtung der ersten Ausgangsöffnung (11) zu bewegen, wobei das elastische Element (8) eine elastische Rückstellkraft auf das mobile Element (2) aufschlägt, die dazu tendiert, sich der Translationsbewegung des mobilen Elements (2) in der ersten axialen Aufnahme (5) in Richtung der ersten Ausgangsöffnung (11) entgegenzusetzen, und der Einsatz (3) aus einem elektrisch leitfähigen Material gebildet ist und das mobile Element (2) aus einem elektrisch isolierenden Material gebildet ist.

2. Düse nach Anspruch 1, **dadurch gekennzeichnet**, das die zweite axiale Aufnahme (4) des mobilen Elements (2) eine zweite Ausgangsöffnung (12) umfasst, die sich auf Höhe einer Vorderfläche (2a) des mobilen Elements (2) befindet, wobei der Einsatz (3) in der zweiten axialen Aufnahme (4) so angeordnet ist, dass der vordere Teil (3a), der eine Schürze bildet, durch die zweite Ausgangsöffnung (12) hindurch zur Außenseite der zweiten axialen Aufnahme (4) hervorspringt.

3. Düse nach einem der vorstehenden Ansprüche, **dadurch gekennzeichnet, dass** das mobile Element (2) in der Lage ist, sich in der ersten axialen Aufnahme (5) des Düsenkörpers (1) translatorisch zu bewegen, bis der vordere Teil (3a) des Einsatzes (3), der eine Schürze bildet, durch die erste Ausgangsöffnung (11) der Vorderfläche (1a) des Düsenkörpers (1) zur Außenseite der axialen Aufnahme (5) hervorspringt.

4. Düse nach einem der vorstehenden Ansprüche, **dadurch gekennzeichnet, dass** die erste axiale Aufnahme (5) des Düsenkörpers (1), die eine Eingangsöffnung (11') umfasst, die es ermöglicht, den ersten axialen Durchgang (5) mit Hilfsgas (23) zu speisen.

5. Düse nach einem der vorstehenden Ansprüche, **dadurch gekennzeichnet, dass** der Düsenkörper (1), das mobile Element (2) und der Einsatz (3) rotationssymmetrische Teile sind, die koaxial zueinander angeordnet sind.

6. Düse nach einem der vorstehenden Ansprüche, **dadurch gekennzeichnet, dass** der Einsatz (3) eine äußere Umfangswand umfasst, deren maximaler Querschnitt kleiner ist als der minimale Querschnitt der ersten axialen Aufnahme (5).

7. Düse nach einem der vorstehenden Ansprüche, **dadurch gekennzeichnet, dass** die zweite axiale Aufnahme (4) wenigstens eine zweite Innenschulter (16) umfasst, und die äußere Umfangswand des Einsatzes (3) weiter einen hinteren Teil (3b) umfasst, der einen zweiten Anschlag (17) umfasst, der der zweiten Innenschulter (16) zugewandt angeordnet ist.

8. Düse nach einem der vorstehenden Ansprüche, **dadurch gekennzeichnet, dass** das mobile Element (2) in der Lage ist, sich zwischen mehreren Stellungen zu bewegen, die umfassen:
- eine Ruhestellung, in der der vordere Teil (3a) des Einsatzes (3) vollständig oder nahezu vollständig in die erste axiale Aufnahme (5) des Düsenkörpers (1) eingezogen ist, und
- eine Arbeitsstellung, in der die Schürze des vorderen Teils (3a) des Einsatzes (3) vollständig oder nahezu vollständig durch die erste Ausgangsöffnung (11) hindurch zur Außenseite der ersten axialen Aufnahme (5) des Düsenkörpers (1) hervorspringt.

9. Laserfokussierkopf, der wenigstens eine Fokussieroptik umfasst, **dadurch gekennzeichnet, dass** er weiter eine Laserdüse nach einem der vorstehenden Ansprüche umfasst.

10. Laseranlage, die einen Lasergenerator, bevorzugt einen Laser ist vom Typ CO₂-, YAG-, Faser- oder Scheibenlaser, einen Laserfokussierkopf und eine Laserstrahlbündelungsvorrichtung, umfasst, die mit dem Lasergenerator und dem Laserfokussierkopf verbunden ist, **dadurch gekennzeichnet, dass** der Laserfokussierkopf nach Anspruch 9 ist.

11. Anlage nach Anspruch 10, **dadurch gekennzeichnet, dass** sie eine Gasquelle und wenigstens eine Gaszuleitung umfasst, die den Fokussierkopf und die Gasquelle fluidisch verbindet, wobei die Laserdüse fluidisch mit dem Fokussierkopf und dem mobilen Element (2) verbunden ist, das sich translatorisch in der ersten Aufnahme (5) des Düsenkörpers (1) bewegt, wenn die Gasquelle den Fokussierkopf und die Laserdüse mit Gas speist.

12. Laserstrahlschneidverfahren, wobei eine Düse nach einem der Ansprüche 1 bis 8, eine Laserfokussierkopf nach Anspruch 9 oder eine Anlage nach einem der Ansprüche 10 oder 11 eingesetzt wird.

## Claims

1. Laser nozzle (1, 2, 3) comprising:
- a nozzle body (1) comprising a first axial housing (5) having first outlet orifice (11) located on a front face (1a) of the nozzle body (1),
- a mobile element (2) comprising a second axial housing (4), said mobile element (2) being arranged in the first axial housing (5),
- an elastic element (8) arranged in the first axial housing (5) between the nozzle body (1) and the mobile element (2), and
- an insert (3) comprising an axial passage (18) and a front part (3a) forming a skirt that projects outwards from the second axial housing (4), said insert (3) being arranged in the second axial housing (4) of the mobile element (2),
**characterised in that** the mobile element (2) is able to be moved in translation in the first axial housing (5) in the direction of the first outlet orifice (11) under the effect of a gaseous pressure being exerted on said mobile element (2) and/or said insert (3), with the elastic element (8) exerting an elastic return force on the mobile element (2) which tends to oppose the translation movement of the mobile element (2) in the first axial housing (5) in the direction of the first outlet orifice (11), and the insert (3) is formed from an electrically conductive material and the mobile element (2) is formed from an electrically insulating material.

2. Nozzle according to claim 1, **characterised in that** the second axial housing (4) of the mobile element (2) comprises a second outlet orifice (12) located on a front face (2a) of the mobile element (2), the insert (3) being arranged in the second axial housing (4) in such a way that the front part (3a) forming a skirt projects outwards from said second axial housing (4) through the second outlet orifice (12).

3. Nozzle according to one of the preceding claims, **characterised in that** the mobile element (2) is able to be moved in translation in the first axial housing (5) of the nozzle body (1) until the front part (3a) that forms a skirt of the insert (3) projects outwards from the axial housing (5) through the first outlet orifice (11) of the front face (1a) of the nozzle body (1).

4. Nozzle according to one of the preceding claims, **characterised in that** the first axial housing (5) of the nozzle body (1) comprising an inlet orifice (11') making it possible to supply said first axial passage (5) with assistance gas (23).

5. Nozzle according to one of the preceding claims, **characterised in that** the nozzle body (1), the mobile element (2) and the insert (3) are revolving parts arranged coaxially to one another.

6. Nozzle according to one of the preceding claims, **characterised in that** the insert (3) comprises an outer peripheral wall of which the maximum section is less than the minimum section of the first axial housing (5).

7. Nozzle according to one of the preceding claims, **characterised in that** the second axial housing (4) comprises at least one second inner shoulder (16), and the outer peripheral wall of the insert (3) further comprises a rear part (3b) comprising a second abutment (17) arranged facing said second inner shoulder (16).

8. Nozzle according to one of the preceding claims, **characterised in that** the mobile element (2) is able to be moved between several positions comprising:
- a rest position wherein the front part (3a) of the insert (3) is entirely or almost entirely inserted into the first axial housing (5) of the nozzle body (1), and
- a working position wherein the skirt of the front part (3a) of the insert (3) projects entirely or almost entirely outwards from the first axial housing (5) of the nozzle body (1), through the first outlet orifice (11).

9. Laser focussing head comprising at least one focussing optics, **characterised in that** it further comprises a laser nozzle according to one of the preceding claims.

10. Laser installation comprising a laser generator, preferably a laser of the type CO₂, YAG, with fibres or with discs, a laser focussing head and a device for conveying the laser beam connected to said laser generator and to said laser focussing head, **characterised in that** the laser focussing head is according to claim 9.

11. Installation according to claim 10, **characterised in that** it comprises a source of gas and at least one gas conveying pipe fluidically connecting the focussing head and the source of gas, with the laser nozzle being fluidically connected to the focussing head and the mobile element (2) being moved in translation in the first housing (5) of the nozzle body (1) when the source of gas supplies the focussing head and the laser nozzle with gas.

12. Method for cutting with a laser beam, wherein a nozzle is implemented according to one of claims 1 to 8, a laser focussing head according to claim 9 or an installation according to one of claims 10 or 11.
